Europäisches Patentamt

European Patent Office

Office européen des brevets

(19)

(11) Veröffentlichungsnummer: **0 125 436**
**A1**

# (12) EUROPÄISCHE PATENTANMELDUNG

(21) Anmeldenummer: **84103127.1**

(22) Anmeldetag: **22.03.84**

(51) Int. Cl.³: **C 08 J 9/14**
**C 08 L 23/26, B 29 D 27/00**

(30) Priorität: **22.03.83 DE 3310295**

(43) Veröffentlichungstag der Anmeldung:
**21.11.84 Patentblatt 84/47**

(84) Benannte Vertragsstaaten:
**AT BE CH DE FR GB IT LI LU NL SE**

(71) Anmelder: **Amrotex AG**
**Spielhof 14a**
**CH-8750 Glarus(CH)**

(72) Erfinder: **Schaerer, André J., Dr.Ing.Chem.**
**Sängglenstrasse 22**
**CH-8122 Pfaffhausen(CH)**

(72) Erfinder: **Zeley, Almos, Dipl.-Chem.**
**Schartentrottenstrasse 4**
**CH-5400 Baden(CH)**

(74) Vertreter: **Oppermann, Ewald, Dipl.-Ing.**
**Am Wiesengrund 35**
**D-6050 Offenbach (Main)(DE)**

(54) Flexibler, geschlossenzellig aus einem Polyolefin geschäumter Dämmstoff.

(57) Es wird ein flexibler, geschlossenzellig geschäumter Dämmstoff, bestehend aus einem thermoplastischen vernetzten Polyolefin vorgeschlagen, der ohne Beeinträchtigung seiner Wirksamkeit bei Temperaturen oberhalb 130°C bis zu etwa 160°C verwendet werden kann. Der Dämmstoff ist mindestens teilweise aus einem Pfropfpolymer bestehend aus einem Polyolefin oder Polyolefin-Copolymer und einem Vinylsilan sowie einem Katalysator für Feuchtigkeitsvernetzung geschäumt und feuchtigkeitsvernetzt. Eine hohe Wärmebeständigkeit wird auch erreicht, wenn der Dämmstoff das Pfropfpolymer nur in einem bestimmten Anteilsbereich enthält, wobei der Rest aus einem peroxidisch vernetzten Polyolefin oder Polyolefin-Copolymer besteht.

EP 0 125 436 A1

## Flexibler, geschlossenzellig
## aus einem Polyolefin geschäumter Dämmstoff

Die Erfindung bezieht sich auf einen flexiblen, geschlossenzellig geschäumten Dämmstoff, bestehend aus einem thermoplastischen vernetzten Polyolefin. Die Erfindung schließt auch ein Verfahren zur Herstellung des Dämmstoffes ein.

Durch Aufschäumen von thermoplastischen und vernetzbaren Polymeren, Copolymeren und Elastomeren werden bekanntlich Materialien hergestellt, die sich in ihren Eigenschaften von den ungeschäumten Produkten grundsätzlich unterscheiden. So ist es zum Beispiel möglich, das Volumen eines Polymeren wie Polystyrol um das hundertfache durch Aufschäumen zu vergrößern, wodurch ein in seinen physikalischen Eigenschaften vom ungeschäumten Ausgangsmaterial unterschiedliches Endprodukt geschaffen wird. Geschäumte Produkte unterscheiden sich vom Ausgangsprodukt hauptsächlich durch ihr geringeres Raumgewicht. Durch Aufschäumen eines Polymeren werden auch unterschiedliche mechanische Eigenschaften erzielt. So verringern sich Zug- und Druckfestigkeit je nach dem erzielten Raumgewicht. Dehnung, Elastizität und Schlagfestigkeit erfahren eine Erhöhung.

Ein wesentlicher Einfluß auf die mechanischen Eigenschaften eines geschäumten Materials wird durch die Zellstruktur bewirkt. Geschlossenzellige Polymerschäume weisen gegenüber offenzelligen Schäumen grundsätzlich ein unterschiedliches Verhalten auf. Eine geschlossenzellige Schaumstruktur setzt einer Verformung einen höheren Widerstand entgegen, da das in den geschlossenen Zellen enthaltene Gas nicht entweichen kann und jede Zelle die Funktion eines Gaskissens ausübt. Bei offenzelligen Schäumen sind die Trennwände zwischen den Zellen partiell oder ganz geöffnet, so daß bei einer Verformung das Gas entweichen kann. Je nach Einsatzgebiet und Verwendung eines Polymerschaumes ist dabei ein offenzelliger oder geschlossenzelliger Schaum erforderlich.

Ein großes Einsatzgebiet für Polymerschäume hat sich in der Wärmedämmung eröffnet. Geschlossenzellige Polymerschäume werden nach dem heutigen Stand der Isoliertechnik in beträchtlichen Mengen in der Industrie und Bauwesen eingesetzt. Hierzu werden geschlossenzellig geschäumte Schaumstoffe aus Polystyrol, Polyurethan, Phenolformaldehyd, Melaminharzen, Harnstoff-Formaldehyd, Ethylen-Propylen-Dien-Polymethylen-Elastomeren (EPDM), Polypropylen, Polyethylen und seine Copolymeren sowie Epoxidharze und ungesättigte Polyesterharze eingesetzt.

Allen diesen Schäumen ist gemeinsam, daß sie als organische Ausgangsprodukte bereits im ungeschäumten Zustand eine geringe Wärmeleitfähigkeit besitzen, die wesentlich kleiner ist als diejenige von gebräuchlichen anorganischen Isolierstoffen, wie z.B. Glas. Ausschlaggebend für den Einsatz geschlossenzelliger Polymerschäume ist jedoch ihre Eigenschaft in ihren Zellen ein Gas einzuschließen. Dieses Gas kann aus Luft oder verschiedenen Treibgasen bestehen. Polymerschäume verdanken ihre Wirkungsweise für das Einsatzgebiet der Wärmedämmung hauptsächlich dem Umstand, daß das in den Zellen eingeschlossene Gas die Konvektion zwischen den Außenflächen verhindert. Wärmedämmende Polymerschäume weisen bei einem Raumgewicht von 20 kg/m$^3$ einen Festkörperanteil von lediglich 2 % auf. 98 Volumenanteile bestehen aus dem in den Zellen eingeschlossenen Gas, dessen geringe Wärmeleitfähigkeit für den Dämmeffekt maßgebend ist. Polymerschäume weisen jedoch einen thermisch beschränkten Einsatzbereich auf. Bei höheren Anwendungstemperaturen beginnen sie zu schmelzen oder verlieren ihre Zellstruktur.

Besonders nachteilig wirkt sich das "Fließen" der Rohrisolation bei Dampfleitungen aus. Der Isoliermantel beginnt von der Rohroberfläche abzufließen und hängt durch, wenn er aus einem thermoplastischen Schaumstoff besteht. Verwendet man als Isoliermaterial vernetzte Polymere, wie Polyurethane, Phenolformaldehyd, Melaminharze, Epoxidharze oder Gummi-Mischungen, so kann der Einsatz auch in einem höheren Temperaturbereich erfolgen. Während bei geschlossenzelligen Schäumen aus thermoplastischen Material eine Temperatur von 130° C durch Schmelzen oder Fließen zu einer Zerstörung der Zellen führt, können Isolierschäume aus vernetzten Polymeren noch eingesetzt werden. Steigert man die Einsatztemperatur aber über 130° C, so macht sich die thermische Zersetzung durch oxidativen Abbau des verwendeten Rohstoffes bemerkbar. Dieser Abbau bewirkt vielfach eine Versprödung und Zerfall der Zellstruktur. Diese Erscheinung, welche bis zum Zerfall der Zellstruktur und Zerbröckelung des Isoliermantels gehen kann, ist zeit-, temperatur- und materialabhängig. Hartschäume aus Phenoplasten und Urethanen weisen eine gute Alterungsbeständigkeit auf und bewähren sich auch in einem Temperaturbereich, welcher über 130° C liegt.

Nachteilig wirkt sich die relativ beschränkte Alterungsbeständigkeit der heute bekannten geschlossenzelligen
flexiblen Schaumstoffe aus. Schaumstoffe aus Gummi können
im allgemeinen nicht über 100° C eingesetzt werden. Sie
sind nur sehr bedingt alterungsbeständig, da sie nur eine
beschränkte Oxidationsbeständigkeit aufweisen. Flexible
geschlossenzellige Schaumstoffe sind jedoch in der Isoliertechnik sehr gefragt, da sie sich mit geringem Arbeitsaufwand um Leitungskrümmer, Bögen, Abzweigungen und Schiebern
nach der Wickelmethode verlegen lassen. Die Isoliertechnik
war daher gezwungen, anorganische, aus Fasern aufgebaute
Isolierstoffe, wie Asbest- oder Glasfasern in Form von
Bändern oder Zöpfen zu verwenden. Asbestfasern bergen jedoch
gesundheitliche Risiken in sich und werden nur noch in beschränktem Umfang eingesetzt. Das Wärmedämmvermögen dieser
anorganischen auf Fasern beruhenden Isolierstoffe ist jedoch
wesentlich geringer als bei einem geschlossenzelligen
Material.

Es hat daher nicht an Versuchen gefehlt, einen flexiblen
geschlossenzelligen Schaumstoff zu entwickeln, welcher auch
in einem Temperaturbereich von über 130° C eingesetzt werden
kann.

Es ist bekannt, thermoplastische Olefine, wie z.B. Polyethylen,
Ethylen-Propylen-Kautschuk (EPM) oder EPDM durch Vernetzung
in ein Material überzuführen, welches eine wesentlich höhere
Temperaturbeständigkeit aufweist als das unvernetzte Ausgangsmaterial.

Es ist des weiteren auch bekannt, solche Rohstoffe nicht nur
einer Vernetzung, sondern auch einer chemischen Verschäumung zu unterwerfen. Das japanische Furokawa-Verfahren zur Herstellung von vernetztem Polyethylenschaum bedient sich folgender Verfahrensschritte: Ein niedermolekulares Polyethylen mit einem hohen Schmelzindex, welcher größer als 30 ist, wird mit einem Peroxid und einem chemischen Treibmittel versetzt und homogen vermischt. Anschließend wird die Mischung mittels einer Breitschlitzdüse zu einer Platte extrudiert. Dieser Extrusionsvorgang muß jedoch bei einer Temperatur vorgenommen werden, welche unterhalb der Reaktionstemperatur des Peroxides, d.h. unterhalb 135° C, liegt, um eine Vernetzung des Materials in der Breitschlitzdüse zu vermeiden. Diese Forderung kann jedoch nur durch Verwendung eines Ausgangsmaterials mit sehr hohem Schmelzindex erfüllt werden. Die extrudierte Platte durchläuft eine Heizstrecke, in welcher das Material zuerst vernetzt und anschließend bei zunehmender Materialtemperatur durch Zersetzung des chemischen Treibmittels aufschäumt. Aber auch dieses Material kann nicht über 130° C eingesetzt werden.

Der Erfindung liegt die Aufgabe zugrunde, einen geschäumten Dämmstoff bereitzustellen, der auch in einem 130° C übersteigenden Temperaturbereich ohne Beeinträchtigung seiner Wirksamkeit verwendet werden kann. Daneben soll ein zur Herstellung des Dämmstoffes geeignetes Verfahren angegeben werden.

Die gestellte Aufgabe wird bei einem Dämmstoff der eingangs bezeichneten Gattung dadurch gelöst, daß er mindestens teilweise aus einem Pfropfpolymer bestehend aus einem Polyolefin oder Polyolefin-Copolymer und einem Vinylsilan sowie einem Katalysator für Feuchtigkeitsvernetzung geschäumt und feuchtigkeitsvernetzt ist.

Es wurde gefunden, daß Pfropfpolymere aus einem Polyolefin oder seinen Copolymeren und einem Vinylsilan infolge der Einführung des Silizium-Moleküls in die Polymerstruktur eine ausgezeichnete Wärmebeständigkeit aufweisen. Unterwirft man solche Pfropfpolymere einem Schäumverfahren, so erhält man nach der Vernetzung Polymerschäume, welche eine höhere Wärmebeständigkeit aufweisen als peroxidisch vernetzte Schäume aus niedermolekularen Polyolefinen.

Es wurde ferner gefunden, daß der Dämmstoff nicht ausschließlich aus dem Pfropfpolymer bestehen muß, um eine höhere Wärmebeständigkeit zu erreichen. Gute Ergebnisse werden auch erzielt, wenn der Dämmstoff das Pfropfpolymer in einem Anteil von 10 bis 60 Gew.% enthält, und wenn der Rest aus einem peroxidisch vernetzten Polyolefin oder Polyolefin-Copolymer besteht.

Ein Dämmstoff mit sehr guter Temperaturbeständigkeit wird erhalten, wenn er ganz oder teilweise aus einem Pfropfpolymer aus Polyethylen oder einem Polyethylen-Copolymer und Vinyltrimethoxysilan geschäumt und feuchtigkeitsvernetzt ist. Dabei kann ggf. auch der peroxidisch vernetzte Rest aus Polyethylen oder einem Ethylen-Propylen-Copolymer bestehen. Auch Pfropfpolymere aus Ethylen-Propylen und Ethylen-Propylen-Terpolymere weisen nach erfolgter Vernetzung eine sehr gute Temperaturbeständigkeit auf.

Im Gegensatz zu einem chemisch geschäumten Polyolefinmaterial wird im Verfolg des Erfindungsgedankens der Dämmstoff mit einem Treibgas geschäumt. Hierfür können vorteilhaft die bekannten Treibgase zur Anwendung gelangen, wie Dichlortetrafluorethylen oder Dichlordifluormethan.

Das physikalische Schäumverfahren, wie es zur Erzeugung des erfindungsgemäßen Dämmstoffes zur Anwendung gelangt, hat den Vorteil, daß als Ausgangsmaterial auch Polyolefine mit sehr niedrigem Schmelzindex verwendet werden können, was beim erwähnten Furokawa-Verfahren nicht der Fall ist. Dadurch wird ein Schaumstoff mit besseren Festigkeitswerten und höherer Wärmebeständigkeit erzielt. Vorteilhaft wird ein Polyethylen mit einem Schmelzindex von etwa 2,0 bis 6,0 zur Herstellung des Dämmstoffes verwendet. Die Dichte des verwendeten Polyethylens beträgt von 0,912 bis 0,96.

Ein wesentlicher Vorteil der Verwendung eines Pfropfpolymeren als Ausgangsmaterial besteht in der einfachen Vernetzungsmethode. Setzt man dem Pfropfpolymer einen Katalysator für Feuchtigkeitsvernetzung, bestehend aus einer Organo-Zinnverbindung, vorzugsweise ausgewählt aus der Gruppe Dibutylzinndilaurat und Zinn-(II)-Octoat, zu, so tritt durch Feuchtigkeitseinwirkung Vernetzung zwischen den reaktiven Silangruppen auf, welche die langkettigen Polymermoleküle vernetzt. Ein aus Pfropfpolymer und Katalysator erzeugter Schaum ist für die Feuchtigkeitsvernetzung geradezu ideal, da die Feuchtigkeit sehr leicht die dünnen Zellwände durchdringt und die Feuchtigkeitsvernetzung bewirkt. Eine über 50 %ige Vernetzung tritt bereits nach 48-stündiger Lagerung des Schaumstoffes bei einer relativen Luftfeuchtigkeit von 60 bis 70 % ein.

Im Verfolg des Erfindungsgedankens wird in das Pfropfpolymer bezogen auf das Polyolefin von 0,5 bis 5 Gew.% Vinylsilan eingeführt.

Eine weitere Steigerung der Wärmebeständigkeit des Dämmstoffes wird erhalten, wenn ihm ein Antioxidationsmittel
zugegeben ist. Je nach Wahl des Alterungs- bzw. Antioxidationsmittels erzielt man bei den erfindungsgemäßen
vernetzten und geschäumten Dämmstoffen Temperaturbeständigkeiten, die deutlich über der 130° C-Grenze liegen und
bis zu etwa 160° C reichen. Geeignete Antioxidantien sind
schwefelhaltiges, sterisch gehindertes Polyphenol oder
6-Di-Tert.-butyl-4-methylphenol, welche bereits bei Zugabemengen von etwa 0,03 bis 0,5 Gew.% den Dämmstoff wirkungsvoll schützen.

In Weiterführung der Erfindung ist ein Verfahren zur Herstellung des beschriebenen ausschließlich aus einem Pfropfpolymeren gebildeten Dämmstoffes dadurch gekennzeichnet,
daß man granulatförmiges Polyolefin oder Polyolefin-Copolymer mit 0,5 bis 5 Gew.% Vinylsilan vermischt, die erhaltene Mischung unter Feuchtigkeitsabschluß einem beheizten Mischextruder aufgibt, im Mischextruder bei einer
Materialtemperatur zwischen etwa 180 und 200° C zur Bildung
des Pfropfpolymers aufschmilzt und homogenisiert, die aus
dem Mischextruder austretende Pfropfpolymerschmelze abkühlt und granuliert, das Pfropfpolymergranulat mit 0,05
bis 1 Gew.% Katalysator für Feuchtigkeitsvernetzung und
ggf. 0,1 bis 2 Gew.% Antioxidationsmittel vermischt, die
erhaltene Mischung einer beheizten Extruderanordnung aufgibt, in der Extruderanordnung bei einer Materialtemperatur zwischen etwa 180 und 210° C aufschmilzt, direkt in
die Schmelze das Treibgas in einer Menge von 10 bis 50 Gew.%
unter Druck einpreßt, die so begaste Schmelze in der Extruderanordnung unter Herabsetzung der Schmelzetemperatur auf
etwa 95 bis 105° C mischt und homogenisiert, die homogenisierte Schmelze extrudiert, das dabei ausgeschäumte Extrudat abkühlt und anschließend zur Feuchtigkeitsvernetzung auf das Extrudat Feuchtigkeit zur Einwirkung bringt.

Wie ersichtlich ist wird hierbei das Treibgas direkt in das sich in der Extruderanordnung befindliche geschmolzene Material eingepreßt. Die Zugabe des Treibgases zur Polymerschmelze bewirkt aufgrund seiner Lösungsmitteleigenschaften eine sprunghaft erniedrigte Schmelzviskosität, welche das Extrudieren von Folien oder Profilen mit langen Fließwegen ermöglicht, wie sie typisch in Breitschlitzdüsen oder Runddüsen großen Durchmessers vorliegen.

Besteht der Dämmstoff aus einem feuchtigkeitsvernetzten Pfropfpolymer und einem peroxidisch vernetzten Polyolefin oder einem Polyolefin-Copolymer, so erfolgt die Herstellung des Dämmstoffes gemäß der weiteren Erfindung dadurch, daß man einem granulatförmigen Pfropfpolymer, hergestellt aus einem Polyolefin oder Polyolefin-Copolymer und 0,5 bis 5 Gew.% Vinylsilan, 0,05 bis 1 Gew.% Katalysator für Feuchtigkeitsvernetzung zugibt, diesen Ansatz in einem Anteil von 10 bis 60 Gew.% mit einem Polyolefin oder Polyolefin-Copolymer vermischt, die erhaltene Mischung einer beheizten Extruderanordnung aufgibt, in der Extruderanordnung plastifiziert, homogenisiert und aufschmilzt bei einer unterhalb der Zersetzungstemperatur eines in die Schmelze eingeführten Peroxids, direkt in die Schmelze das Treibgas in einer Menge von 10 bis 50 Gew.% unter Druck einpreßt, die so begaste Schmelze in der Extruderanordnung unter Herabsetzung der Schmelzetemperatur auf etwa 95 bis 105° C homogenisiert, die homogenisierte Schmelze extrudiert, das dabei ausgeschäumte Extrudat abkühlt, danach zur Feuchtigkeitsvernetzung auf das Extrudat Feuchtigkeit zur Einwirkung bringt und schließlich das so vorvernetzte Extrudat unter anschließender Wärmeeinwirkung peroxidisch vollvernetzt.

Hierbei ist es von Vorteil, wenn das Peroxid dem Treibgas zugemischt und diese Mischung unter Druck in die Schmelze eingepreßt wird, weil dadurch jegliche peroxidische Vernetzung im Extruder ausgeschlossen ist.

Soll beispielsweise ein profilierter geschäumter Dämmstoff hergestellt werden, so wird das extrudierte geschäumte Profil abgekühlt und anschließend der Feuchtigkeitsvernetzung unterworfen. Man erzielt dadurch eine Vorvernetzung von 20 - 50 %, welche durch die Vernetzung des in der Mischung enthaltenen Pfropfpolymers vollzogen wird. Unterwirft man nunmehr das vorvernetzte Schaumprofil einer Temperatur, bei welcher die peroxidische Vernetzung erfolgt, so erzielt man einen hohen Vernetzungsgrad über 80 %, ohne daß das geschlossenzellige Schaumprofil kollabiert. Ein solches Profil, wie z.B. ein geschäumtes Rohr kann auf eine Dampfleitung mit einer Oberflächentemperatur von 150° C aufgezogen werden. Die peroxidische Vernetzung des Schaumrohres erfolgt nunmehr von der Berührungsfläche her nach außen.

Als eine einfache und zuverlässige Prüfmethode über die Alterungs- und Oxidationsbeständigkeit des Dämmstoffes hat sich das DSC-Verfahren (Differential-Scanning-Calorimetry) bewährt. Dabei werden 5 bis 10 mg des zu prüfenden Materials in einer geschlossenen Aluminiumkapsel unter durchfließendem reinen Sauerstoff auf Prüftemperatur gebracht. Die bei der Zersetzung der Probe freiwerdende Wärmetönung wird calorimetrisch erfaßt und aufgezeichnet. Die Prüfung erfolgt insofern unter erschwerten Bedingungen, als sich die Probe bei der Prüftemperatur unter Sauerstoffatmosphäre befindet. Das DSC-Verfahren gestattet eine ausgezeichnete Beurteilung der Wärmebeständigkeit eines Polymeren.

Die Erfindung wird nachfolgend anhand zweier Verfahrensbeispiele noch näher beschrieben.


Beispiel 1


Ein handelsübliches füllstofffreies Hochdruck-Polyethylen-Granulat mit einem Schmelzindex von 2, einer Dichte von 0,92 und einer durchschnittlichen Korngröße von 3 mm wurde in einem Schnellmischer mit 2 Gew.% Vinyltrimethoxysilan gemischt. Dieser Mischung wurde noch 0,2 Gew.% eines handelsüblichen Peroxids, im vorliegenden Beispiel 2,5-Dimethyl-2,5-di-(t-butylperoxi)-hexan, als Hilfsmittel für die Anlagerung der Vinylverbindung an das PE-Molekül zugemischt. Diese Mischung wurde zur Bildung des Pfropfpolymeren unter Feuchtigkeitsabschluß in einen Mischextruder gegeben und bei einer Materialtemperatur von etwa 180° C aufgeschmolzen und homogenisiert. Das so erzeugte Pfropfpolymer wurde am Kopfende des Mischextruders extrudiert, abgekühlt und granuliert. Das so erzeugte Pfropfpolymer-granulat konnte unter Feuchtigkeitsabschluß zwischenge-lagert werden.

Dem Pfropfpolymergranulat wurde ein Katalysator bestehend aus 0,1 Gew.% (auf das Pfropfpolymergranulat bezogen) Dibutylzinndilaurat und als Antioxidationsmittel 0,2 Gew.% (bezogen auf das Pfropfpolymergranulat) 6-Di-Tert.-butyl-4-methylphenol zugemischt. Die Mischung wurde in einer Extruderanordnung, bestehend aus zwei hintereinander geschalteten Extrudern, zugeführt und im ersten Extruder bei einer Materialtemperatur von etwa 180° C aufgeschmolzen. Am Ende des Extruders wurde in die Schmelze als Treibgas Dichlortetrafluorethylen in einer Menge von 35 Gew.% (bezogen auf die Schmelze) eingepreßt und die so begaste Schmelze in den zweiten Extruder übergeführt. Im zweiten Extruder wurde die Schmelze unter Herabsetzung der Schmelzetemperatur auf 95° C gemischt und homogenisiert. Die homogene Schmelze wurde danach durch einen Rohrkopf extrudiert, wobei das Extrudat beim Austritt aus der Düse expandierte. Der so in Schlauchform erzeugte feinzellige Schaum wurde durch Aufschneiden und Auslegung zur Bahn gekühlt und auf eine Trommel aufgewickelt. Die Trommel wurde in einem Raum mit einer relativen Luftfeuchtigkeit von > 60 % für einen Zeitraum von 48 h gelagert, wobei die Feuchtigkeitsvernetzung bis zu einem Vernetzungsgrad von 75 % erfolgte.

Nach dem Schneiden der flachliegenden Bahn zu Isolierbändern wurden diese auf ein Dampfrohr mit einer Oberflächentemperatur von 160° C gewickelt. Der Schaum floß nicht von dem Rohr ab, sondern legte sich ohne Änderung seiner Zellstruktur an die Rohroberfläche an. Ein thermischer Abbau konnte auch nach 6 Monaten nicht beobachtet werden.

Wie ersichtlich ist, konnte der verfahrensgemäß erhaltene flexible, geschlossenzellig geschäumte Dämmstoff bei einer 130° C übersteigenden Temperatur ohne Beeinträchtigung seiner Wirksamkeit verwendet werden. Der Dämmstoff kann in Raumgewichten von 0,2 bis über 100 g/dm³ hergestellt werden.

Beispiel 2
_____

Einem entsprechend Beispiel 1 hergestellten Pfropfpolymer wurden in einem Schnellmischer 0,05 Gew.% Dibutylzinndilaurat als Katalysator für die Feuchtigkeitsvernetzung zugegeben. 30 % dieses Ansatzes wurden mit 70 Gew.% eines Polyehtylens mit einer Dichte von 0,92 und einem Schmelzindex von 2 vermischt und die Mischung einem Extruder zugegeben, in welchem die Mischung bei einer Schmelztemperatur von 145° C plastifiziert wurde. Der Extruder wies ein L/D-Verhältnis von 30 : 1 auf. Nach Durchlauf der Schmelzzone erfolgte das Einspeisen einer Mischung bestehend aus 94 % Dichlortetrafluorethylen und 6 Gew.% 2,5-Dimethyl-2,5-di-(t-butylperoxi) -hexan direkt in die Schmelze. Das unter Druck eingepreßte Treibgasgemisch erniedrigte die Schmelztemperatur auf 110° C und diese wurde bis zum Austritt aus einem Rohrwerkzeug durch Kühlen auf eine Temperatur von 95° C abgesenkt. Der Anteil des Treibgasgemisches wurde auf 30 Gew.% des Extrudats eingestellt, wozu ein Einpreßdruck von 80 bar erforderlich war. Beim Austritt aus dem Rohrwerkzeug schäumte die Rohrwandung durch freie Expansion in der Luft auf und wurde durch Luft oder Berieselung mit Wasser auf Raumtemperatur abgekühlt. Das so erzeugte Rohr aus geschlossenzelligem Polyethylenschaum wurde bei einer Temperatur von 20° C und einer relativen Feuchtigkeit von ＞ 60 % während 72 Stunden gelagert und so der Vorvernetzung unterworfen. Man erzielte einen Vernetzungsgrad von 46 %. Anschließend konnte das Rohr der peroxidischen Vollvernetzung durch 24-stündige Lagerung bei einer Temperatur von 135° C unterzogen werden, wodurch sich der Vernetzungsgrad auf 90 % erhöht. Das Rohr konnte jedoch auch direkt nach erfolgter Vorvernetzung auf das zu isolierende heiße Rohr verlegt werden, wobei die Vollvernetzung durch die Wärmeeinwirkung des zu isolierenden Rohres allmählich erfolgte. Ein thermischer Abbau konnte bei einer Wandtemperatur des heißen Rohres von 160 ° C auch nach 4 Monaten nicht festgestellt werden.

Patentansprüche

1.      Flexibler, geschlossenzellig geschäumter Dämmstoff, bestehend aus einem thermoplastischen vernetzten Polyolefin, dadurch gekennzeichnet, daß er mindestens teilweise aus einem Pfropfpolymer bestehend aus einem Polyolefin oder Polyolefin-Copolymer und einem Vinylsilan sowie einem Katalysator für Feuchtigkeitsvernetzung geschäumt und feuchtigkeitsvernetzt ist.

2.      Dämmstoff nach Anspruch 1, dadurch gekennzeichnet, daß er das Pfropfpolymer in einem Anteil von 10 bis 60 Gew.% enthält, und daß der Rest aus einem peroxidisch vernetzten Polyolefin oder Polyolefin-Copolymer besteht.

3.      Dämmstoff nach Anspruch 1 oder 2, dadurch gekennzeichnet, daß er mit einem Treibgas geschäumt ist.

4.  Dämmstoff nach einem der Ansprüche 1 bis 3, <u>da-durch gekennzeichnet</u>, daß sein Pfropfpolymeranteil aus Polyethylen oder einem Polyethylen-Copolymer und Vinyltrimethoxysilan geschäumt und feuchtigkeitsvernetzt ist.

5.  Dämmstoff nach Anspruch 2, <u>dadurch gekennzeichnet</u>, daß der peroxidisch vernetzte Rest aus Polyethylen oder einem Ethylen-Propylen-Copolymer besteht.

6.  Dämmstoff nach Anspruch 4 oder 5, <u>dadurch gekenn-zeichnet</u>, daß ein Polyethylen mit einem Schmelzindex von 2,0 bis 6,0 zu seiner Herstellung verwendet ist.

7.  Dämmstoff nach den Ansprüchen 4 bis 6, <u>dadurch ge-kennzeichnet</u>, daß ein Polyethylen mit einer Dichte von 0,912 bis 0,96 zu seiner Herstellung verwendet ist.

8.  Dämmstoff nach einem der Ansprüche 1 bis 7, <u>dadurch gekennzeichnet</u>, daß er eine Organo-Zinnverbindung als Katalysator für Feuchtigkeitsvernetzung enthält.

9.  Dämmstoff nach Anspruch 8, <u>dadurch gekennzeichnet</u>, daß er einen Katalysator für Feuchtigkeitsvernetzung ausgewählt aus der Gruppe Dibutylzinndilaurat und Zinn-(II)-Octoat enthält.

10. Dämmstoff nach einem der Ansprüche 1 bis 9, <u>dadurch gekennzeichnet</u>, daß in das Pfropfpolymer bezogen auf das Polyolefin von 0,5 bis 5 Gew.% Vinylsilan eingeführt ist.

11. Dämmstoff nach einem der Ansprüche 1 bis 10, <u>dadurch gekennzeichnet</u>, daß ihm ein Antioxidationsmittel zugegeben ist.

12. Dämmstoff nach Anspruch 11, <u>dadurch gekennzeichnet</u>, daß als Antioxidationsmittel schwefelhaltiges, sterisch gehindertes Polyphenol oder 6-Di-Tert.-butyl-4-methylphenol in einer Menge von 0,03 bis 0,5 Gew.% bezogen auf das Pfropfpolymer zugegeben ist.

13. Dämmstoff nach einem der Ansprüche 1 bis 12, <u>dadurch gekennzeichnet</u>, daß er mit Dichlortetrafluorethylen oder Dichlordifluormethan geschäumt ist.

14. Verfahren zur Herstellung eines flexiblen, geschlossenzellig geschäumten Dämmstoffes, bestehend aus einem thermoplastischen vernetzten Polyolefin, nach einem oder mehreren der Ansprüche 1 bis 13, <u>dadurch gekennzeichnet</u>, daß man granulatförmiges Polyolefin oder Polyolefin-Copolymer mit 0,5 bis 5 Gew.% Vinylsilan vermischt, die erhaltene Mischung unter Feuchtigkeitsabschluß einem beheizten Mischextruder aufgibt, im Mischextruder bei einer Materialtemperatur zwischen etwa 180 und 200° C zur Bildung des Pfropfpolymers aufschmilzt und homogenisiert, die aus dem Mischextruder austretende Pfropfpolymerschmelze abkühlt und granuliert, das Pfropfpolymergranulat mit 0,05 bis 1 Gew.% Katalysator für Feuchtigkeitsvernetzung und ggf. 0,1 bis 2 Gew.% Antioxidationsmittel vermischt, die erhaltene Mischung einer beheizten Extruderanordnung aufgibt, in der Extruderanordnung bei einer Materialtemperatur zwischen etwa 180 und 210° C aufschmilzt, direkt in die Schmelze das Treibgas in einer Menge von 10 bis 50 Gew.% unter Druck einpreßt, die so begaste Schmelze in der Extruderanordnung unter Herabsetzung der Schmelzetemperatur auf etwa 95 bis 105° C mischt und homogenisiert, die homogenisierte Schmelze extrudiert, das dabei ausgeschäumte Extrudat abkühlt und anschließend zur Feuchtigkeitsvernetzung auf das Extrudat Feuchtigkeit zur Einwirkung bringt.

15. Verfahren zur Herstellung eines flexiblen, geschlossenzellig geschäumten Dämmstoffes, bestehend aus einem thermoplastischen vernetzten Polyolefin, nach einem oder mehreren der Ansprüche 1 bis 13, dadurch gekennzeichnet, daß man einem granulatförmigen Pfropfpolymer, hergestellt aus einem Polyolefin oder Polyolefin-Copolymer und 0,5 bis 5 Gew.% Vinylsilan, 0,05 bis 1 Gew.% Katalysator für Feuchtigkeitsvernetzung zugibt, diesen Ansatz in einem Anteil von 10 bis 60 Gew.% mit einem Polyolefin oder Polyolefin-Copolymer vermischt, die erhaltene Mischung einer beheizten Extruderanordnung aufgibt, in der Extruderanordnung plastifiziert, homogenisiert und aufschmilzt bei einer unterhalb der Zersetzungstemperatur eines in die Schmelze eingeführten Peroxids, direkt in die Schmelze das Treibgas in einer Menge von 10 bis 50 Gew.% unter Druck einpreßt, die so begaste Schmelze in der Extruderanordnung unter Herabsetzung der Schmelzetemperatur auf etwa 95 bis 105° C homogenisiert, die homogenisierte Schmelze extrudiert, das dabei ausgeschäumte Extrudat abkühlt, danach zur Feuchtigkeitsvernetzung auf das Extrudat Feuchtigkeit zur Einwirkung bringt und schließlich das so vorvernetzte Extrudat unter anschließender Wärmeeinwirkung peroxidisch vollvernetzt.

16.    Verfahren nach Anspruch 15, <u>dadurch gekennzeichnet</u>, daß das Peroxid dem Treibgas zugemischt und diese Mischung unter Druck in die Schmelze eingepreßt wird.

**0125436**

Europäisches
Patentamt

**EUROPÄISCHER RECHERCHENBERICHT**

Nummer der Anmeldung

EP 84 10 3127

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 160 072 (K. SHINKAI et al.)<br><br>* Ansprüche 14-16; Spalte 3, Zeilen 1-16; Spalte 4, Zeilen 18-25; Spalte 6, Zeile 64 - Spalte 7, Zeile 3; Spalte 8, Zeilen 15-25; Beispiele *<br><br>--- | 1,4,6,<br>7,10,<br>14 | C 08 J 9/14<br>C 08 L 23/26<br>B 29 D 27/00 |
| X | DE-A-2 740 709 (SEKISUI KAGAKU KOGYO)<br>* Ansprüche; Seite 13, Zeile 18 - Seite 14, Zeile 1; Seite 18, Zeilen 21-27; Seite 20, Zeile 4 - Seite 21, Zeile 11; Seite 22, Zeilen 13-30; Seite 26, Zeilen 1-32; Seite 30, Zeilen 15-26; Beispiele *<br><br>--- | 1,2,4-<br>12,15 | |
| X | DE-A-2 310 040 (DOW CORNING)<br><br>* Ansprüche; Beispiel 1; Seite 4, Zeile 30 - Seite 6, Zeile 20; Seite 9, Zeilen 4-8 *<br><br>--- | 1,3,4,<br>8-11,<br>14 | RECHERCHIERTE SACHGEBIETE (Int. Cl. 3)<br><br>C 08 J |
| X | BE-A- 894 652 (SEKISUI KASEIHIN KOGYO)<br><br>* Ansprüche 1-4; Seite 7, Zeilen 29-35; Seite 8, Zeilen 28-33; Beispiel 1 *<br><br>---          -/- | 1,3,4,<br>8-11,<br>13 | |

Der vorliegende Recherchenbericht wurde für alle Patentansprüche erstellt.

| Recherchenort<br>DEN HAAG | Abschlußdatum der Recherche<br>31-07-1984 | Prüfer<br>HALLEMEESCH A.D. |
|---|---|---|

KATEGORIE DER GENANNTEN DOKUMENTEN
X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | CHEMICAL ABSTRACTS, Band 87, Nr. 19, 7. November 1977, Seite 28, Nr. 152936u, Columbus, Ohio, USA; & JP - A - 77 71563 (SHOWA ELECTRIC WIRE AND CABLE CO., LTD.) 15.06.1977 * Zusammenfassung * | 12 | |

-----

RECHERCHIERTE
SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 31-07-1984 | HALLEMEESCH A.D. |